# EUROPEAN PATENT APPLICATION

(11) **EP 3 495 675 A1**
(43) Date of publication of application: **12.06.2019**
(21) Application number: 17206399.2
(22) Date of filing: 11.12.2017
(51) Int. Cl.: F16C 25/08, F16C 19/06, F16C 19/08, F16C 33/41

(54) **BEARING DEVICE HAVING A SPRING UNIT**

(71) Applicant: Halmeco AB, 442 94 Ytterby (SE)
(72) Inventor: LINDÉN, Hans, 442 94 YTTERBY (SE)
(74) Representative: AWA Sweden AB

(57) **Abstract**

The present invention relates to a bearing device comprising a plurality of rolling elements, an outer ring, an inner ring arranged at least partly inside said outer ring such that an intermediate ring space is formed between said outer ring and said inner ring, wherein said plurality of rolling elements are arranged in at least one row arranged at least partly inside said intermediate ring space, such that a first point contact is established between each one of the rolling elements in said at least one row and said outer ring, and a second point contact is established between each one of the rolling elements in said at least one row and said inner ring, wherein said bearing device further comprises a spring unit arranged at least partly in said intermediate ring space such that a third point contact is established between each one of the rolling elements in said at least one row and said spring unit, wherein said spring unit is configured to press the rolling elements in said at least one row against said first point contact and said second point contact.

## Description

### FIELD OF THE INVENTION

The present invention relates to a bearing device. It particularly relates to a bearing device comprising a spring unit.

### BACKGROUND OF THE INVENTION

Bearing devices are used in a number of different industrial applications having rotating parts. They are typically used to take up loads in an axial and/or radial direction, and to reduce friction between moving parts. There is a wide variety of bearing types available on the market. Rolling bearings is one of the more common types, and they normally consist of an inner and an outer ring, between which a plurality of rolling elements are placed. The rolling elements are typically either balls (ball bearings) or rollers (roller bearings), and a common type is called deep-groove ball bearings. The deep-groove ball bearings normally comprise four vital parts: an inner ring, an outer ring, balls and a cage for separating the balls. In this type of ball bearings, the inner and outer ring both have a groove shaped to fit the balls, so that the balls are kept in place between the rings. In order for deep-groove ball bearings to work as desired, there are very high demands on tolerances, both on the bearing itself but also on the surrounding parts, such as the bearing shaft and the bearing housing. For example, there are significant demands on the tolerances of all parts in order for deep-groove ball bearings to work as desired in applications with a rotating inner ring load or with a rotating outer ring load. This creates a demand of a so-called tight fit between the inner ring and the adjacent rotating shaft, or between the outer ring and the adjacent rotating shaft, respectively. This a normally achieved by over-dimensioning the shaft in relation to the ring dimensions such that a friction fit is created. However, if the shaft tolerances are too wide, the inner and outer rings and their very tight play (<0.004 microns) in relation to each other will expand in a radial direction such that friction is created between the two rings. This will in turn create a rotational lock between the rolling elements and the surrounding inner ring and outer ring. This means that there are very high demands on the surrounding shaft and housing tolerances and its production methods and cost. This means that the production costs of commonly available bearing devices are relatively high. The production involves several critical steps, such as turning, hardening, grinding, polishing, and mounting. In addition to making the production expensive, the number of steps required also results in a relatively high energy consumption for the production process. Further, a clean environment is necessary to prevent the bearings from failing and/or from shortening their life length. There is therefore a need for providing an improved bearing which is cheaper and simpler to manufacture, requires less energy during production and is more forgiving regarding tolerance demands as mentioned above.

### SUMMARY OF THE INVENTION

It is an object of the present invention to alleviate at least some of the mentioned drawbacks of the prior art and to provide an improved bearing which has less strict demands on tolerances and is therefore cheaper and easier to produce. This and other objects, which will become apparent in the following, are accomplished by a bearing device as defined in the accompanying independent claim.

The term exemplary should in this application be understood as serving as an example, instance or illustration.

The present invention is at least partially based on the realisation that by minimising the contact area between the rolling elements and the inner and outer ring, and using a spring unit to keep the rolling elements in place, the tolerance demands as well as the sensitivity to dust or dirt may be lowered. The minimised contact area may further improve the performance of the bearing, since it results in less friction between the rolling elements and the inner and outer ring respectively.

According to a first aspect of the present invention, a bearing device is provided. The bearing device comprises a plurality of rolling elements, an outer ring, and an inner ring arranged at least partly inside said outer ring such that an intermediate ring space is formed between said outer ring and said inner ring. Said plurality of rolling elements are arranged in at least one row arranged at least partly inside said intermediate ring space, such that a first point contact is established between each one of the rolling elements in said at least one row and said outer ring, and a second point contact is established between each one of the rolling elements in said at least one row and said inner ring. The bearing device further comprises a spring unit arranged at least partly in said intermediate ring space such that a third point contact is established between each one of the rolling elements in said at least one row and said spring unit. Said spring unit is configured to press the rolling elements in said at least one row against said first point contact and said second point contact.

The rolling elements may for example be made of metal or a ceramic material, or any other suitable material. In some embodiments, all of the plurality of rolling elements are made of the same material. In other embodiments, at least one of the plurality of rolling elements may be made of a different material.

The outer ring and the inner ring are rotatable in relation to each other. They may suitably be made of a metallic material. The outer and inner ring may be made of the same material, or they may be made of different materials. The outer and inner ring may preferably be produced by turning.

In some embodiments, the inner ring and outer ring may be hardened. This may be advantageous to prevent the inner and outer ring from deforming when the bearing device is subjected to high loads. In other embodiments, the inner and outer ring may not be hardened. This makes production less expensive and time-consuming, and any deformations of the inner and outer ring caused by high loads may be compensated for by the spring unit. In other words, the bearing device may work as intended even though there might be slight deformations on the inner and/or outer ring, in contrast to conventional rolling bearings where deformations on the inner and/or outer ring may cause the bearing to fail.

In some embodiments, the dimensions of the inner and outer ring, such as the outer diameter, inner diameter and width, may be adapted to international standards, such as ISO 15:1981 as in force of the date of filing of the present application. At least a portion of the inner ring must have an outer diameter which is smaller than the inner diameter of at least a portion of the outer ring, in order for the intermediate ring space to be formed. The intermediate ring space may be formed as a toroid or a torus. It must be large enough for the rolling elements to be arranged at least partly inside the intermediate ring space.

By the plurality of rolling elements being arranged in at least one row is meant that there are at least two rolling elements arranged adjacent to each other at least partly inside said intermediate ring space, along the circumferential extension of the inner ring. Additionally or alternatively, the plurality of rolling elements being arranged in at least one row may be understood to mean that at least two rolling elements are sequentially arranged around a circumference of the inner ring. Typically, more than two rolling elements are comprised in said at least one row, such as e.g. more than ten rolling elements. In some embodiments, said at least one row is a circumferentially continuous row, such as e.g. a circular row, and the rolling elements in said at least one row comprises all rolling elements in the circumferentially continues row. In some embodiments, the plurality of rolling elements may include all rolling elements comprised by the bearing device. In other embodiments, the bearing device may comprise at least one additional rolling element not included in said plurality of rolling elements. The at least one additional rolling element may also be arranged in said intermediate ring space. For example, such additional rolling element may be interposed between two rolling elements in said at least one row, or may divide the plurality of rolling elements into two coaxial rows following the same circumferentially path in said rolling bearing space. In such case, at least one of the two coaxial rows is said at least one row mentioned above.

The terms first point contact, second point contact and third point contact for each rolling element in said at least one row should in the context of this application be understood as meaning that the contact area between each one of the rolling element and the outer ring, inner ring and spring unit, respectively, may be approximated to a point. The contact area at each point contact may in some embodiments be smaller than the corresponding surface area of conventional deep groove ball bearings, preferably no more than 10% of the corresponding surface area, or no more than 5%, or no more than 1%. For example, the rolling elements may be spherically shaped, providing for the possibility of such point contact.

In order to establish a first point contact between each of the plurality of rolling elements and the outer ring, and in order to keep the plurality of rolling elements inside the intermediate ring space, the outer ring may have at least one protrusion/edge on its inner surface or side, extending along the circumferential extension of the outer ring. The first point contact may then be established between the outer ring protrusion/edge and the rolling elements. If there are two rows of rolling elements, the outer ring may suitably have two protrusions/edged. In a similar manner, to establish a second point contact between each of the plurality of rolling elements and the inner ring, the inner ring may have at least one protrusion/edge on its outer surface/side, extending along the circumferential extension of the inner ring. The second point contact may then be established between the inner ring protrusion/edge and the rolling elements.

The first point contact and the second point contact are suitably arranged to keep each one of the rolling elements inside of the intermediate ring space, even when they are subjected to a force by the spring unit.

The spring unit may at least partially be made of a polymeric material, or any other suitable elastically deformable material. In order for the spring unit to press the rolling elements in said at least one row against said first point contact and said second point contact, said third point contact may suitably be located on an opposite side of the rolling elements in relation to said first and second point contacts. The spring unit may be held in place by a protrusion/edge on the inner ring and/or outer ring, as described in relation to the first and second point contacts. In embodiments where there are more than one rows of rolling elements, the spring unit may be held in place between two rows of rolling elements.

According to an exemplary embodiment of the present invention, the rolling elements in said at least one row and said spring unit are arranged in said intermediate ring space such that said spring unit is elastically deformed. In other words, the spring unit is arranged to take up at least a part of the force that the rolling elements are subjected to from their first and second point contacts. This force causes the spring unit to be elastically deformed, which causes the spring unit to exert a pressure on the rolling elements through said third point contact, towards said first and second point contacts. This is advantageous since it keeps the rolling elements in place, which enhances the performance of the bearing device. How high the pressure exerted on the rolling elements by the spring unit must be depends on for example the dimensions of the device and the load the device is subjected to. The pressure should be high enough to keep the rolling elements in contact with the respective point contacts at all times, in order for the device to function as desired.

According to an exemplary embodiment of the present invention, the spring unit is elastically deformed 0.1 - 3 mm, preferably 0.5 - 1 mm. This deformation is beneficial for achieving a desired pressure against the rolling elements. If the pressure would be too high, it would be difficult to rotate the rolling elements due to the high friction it would cause. If the pressure is too low the rolling elements might not be kept in place. Therefore, it is important to adapt the deformation of the spring unit to the dimensions of the bearing device and to the loads it will be subjected to.

According to an exemplary embodiment of the present invention, said at least one row is arranged to rotate about a central axis of said bearing device, and each one of said rolling elements in said at least one row is arranged to rotate about a respective rolling element rotational axis. By at least one row is meant at least one row of rolling elements. This is beneficial to enable the inner and outer ring to rotate in relation to each other, about the central axis of said bearing device. According to one exemplary embodiment, said central axis and said respective rolling element rotational axis are parallel.

According to an exemplary embodiment of the present invention, said respective rolling element rotational axis intersects said third point contact for each rolling element in said at least one row. This is advantageous because if the rotational axis does not intersect the third point contact, which is the point contact between the plurality of rolling elements in the first row and said spring unit, the friction between the spring unit and the rolling elements would reduce the rotational speed of the rolling elements.

According to an exemplary embodiment of the present invention, said inner ring and said outer ring are arranged coaxially. This may be desired in some applications, and it may also be easier to manufacture than bearing devices where the inner ring and outer ring are not arranged coaxially. In other embodiments however, the inner ring and outer ring may not be arranged coaxially. This may be desired for some types of applications.

According to an exemplary embodiment of the present invention, said at least one row is a first row of rolling elements, and said plurality of rolling elements are arranged in at least said first row and in at least a second row arranged at least partly inside said intermediate ring space, such that a fourth point contact is established between each one of the rolling elements in said second row and said outer ring, and a fifth point contact is established between each one of the rolling elements in said second row and said inner ring, and a sixth point contact is established between each one of the rolling elements in said second row and said spring unit. Having a second row of rolling elements is advantageous for example in applications where the bearing device has to be able to take a higher load.

Embodiments mentioned in relation to the first row are applicable to the second row as well. For example, the second row may be a circumferentially continuous row. The configuration of first row and the second row may be identical and/or mirror images of each other. Additionality or alternatively, the first row and the second row are arranged parallel to each other.

The fourth, fifth and sixth point contacts for the rolling elements in the second row correspond to the first, second and third point contacts for the rolling elements in the first row. It should be understood that there are three point contacts on the rolling elements in the second row as well; the indexes fourth, fifth and sixth are only used to clarify that these have a different location than the first, second and third point contacts. The fourth point contact between each one of the rolling elements in the second row and said outer ring corresponds to the first point contact between each one of the rolling elements in the first row and said outer ring. The fifth point contact between each one of the rolling elements in the second row and said inner ring corresponds to the second point contact between each one of the rolling elements in the first row and said inner ring. The sixth point contact between each one of the rolling elements in the second row and said spring unit corresponds to the third point contact between each one of the rolling elements in the first row and said spring unit. The fourth, fifth and sixth point contacts may correspond to a mirroring of the first, second and third point contacts, about a plane defined by the circumferential extension of the spring unit and/or a circumferential extension of the inner ring and/or a circumferential extension of the outer ring. All of the features and advantages described in relation to the first, second and third point contacts may also be applied to the fourth, fifth and sixth point contacts.

According to an exemplary embodiment of the present invention, said spring unit is arranged between said first row and said second row of rolling elements. This is advantageous since it allows for the same spring unit to be used for both the first and second row of rolling elements.

According to an exemplary embodiment of the present invention, said spring unit is arranged to press said first and second rows of rolling elements in opposite directions. This may be beneficial since it allows for the load put on the bearing device to be evenly distributed between both the first and second rows of rolling elements.

According to an exemplary embodiment of the present invention, each one of said plurality of rolling elements is spheroidal. In some embodiments, each one of said plurality of rolling elements may be spherical. Other shapes of the rolling elements are also conceivable, such as cylindrical or spheroidal with cut off portions. An advantage of having spheroidal or spherical rolling elements is that it may be easier to arrange the rolling elements so that the first, second and third point contacts, or fourth, fifth and sixth point contacts, are the only points at which the rolling elements are in contact with another element.

According to an exemplary embodiment of the present invention, said spring unit comprises an elastically deformable element. In other embodiments, the whole spring unit may be made from an elastically deformable material. Having an elastically deformable element as part of the spring unit enables the spring unit to apply a pressure on the rolling elements.

The elastically deformable element may for example be an O-ring, a disc spring, or any other type of spring arranged to exert an axially directed force on the rolling elements. In embodiments where the whole spring unit is made of an elastically deformable material, the O-ring or disc spring may constitute the whole spring unit.

According to an exemplary embodiment of the present invention, said spring unit further comprises a supporting element, wherein the third point contact between each one of said plurality of rolling elements and said spring unit is provided on said supporting element. The supporting element may preferably be more stiff than the elastically deformable element. The purpose of having a supporting element is to make sure that the contact area between each one of the plurality of rolling elements and said spring unit at said third point contact is small. If the rolling elements would be in direct contact with the elastically deformable element, the contact area at the third point contact would be larger due to the deformation of the elastically deformable element. A larger contact area results in a higher friction between the rolling elements and the spring unit, which would impair the performance of the bearing device. According to one exemplary embodiment, the hardness and/or stiffness of the supporting element is greater than the hardness of the elastically deformable element so as to prevent plastic deformation of the supporting element during use of the bearing device.

According to an exemplary embodiment of the present invention, the first point contact and the second point contact are the only points at which each one of the plurality of rolling elements are in contact with said inner ring and/or said outer ring. This is advantageous since having more points of contact results in a higher friction, which would impair the performance of the bearing device. More points of contact would also mean that the bearing device would be more sensitive to dirt. The fewer and smaller the points of contact are, the more likely it is that any dirt entering the bearing device may pass through it without damaging the device.

According to an exemplary embodiment of the present invention, said bearing device further comprises at least one sealing element, for sealing the bearing device to prevent dirt and other unwanted material from entering the device. In some embodiments, the bearing device comprises two sealing elements. Having at least one sealing element is advantageous for minimising the risk of the bearing device failing or being damaged due to dirt entering the device.

According to an exemplary embodiment of the present invention, said spring unit is ring shaped. Having a ring shaped spring unit is beneficial since it enables that the rolling elements are always in contact with the spring unit, and they are therefore kept in the desired place.

According to an exemplary embodiment of the present invention, the bearing device further comprises at least one cage for separating said plurality of rolling elements in said at least one row from each other. The cage may be made of a metallic material or a polymeric material. The purpose of having a cage separating the rolling elements may be to reduce noise which would occur if the rolling elements could collide with each other. Further, if the rolling elements would be in contact with each other, the performance of the bearing device would be reduced since there would be an increased friction between the rolling elements.

Generally, all terms used in the description are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### BRIEF DESCRIPTION OF THE DRAWINGS

These and other features and advantages of the present invention will now be further clarified and described in more detail, with reference to the appended drawings showing four different embodiments of a bearing device according to the present invention.
Figure 1a is an exploded view showing a first exemplary embodiment of a bearing device according to the present invention.
Figure 1b is a sectioned perspective view showing the first exemplary embodiment of a bearing device according to the present invention.
Figure 1c is a cross-sectional view showing the first exemplary embodiment of a bearing device according to the present invention.
Figure 2a is a sectioned perspective view showing a second exemplary embodiment of a bearing device according to the present invention.
Figure 2b is a cross-sectional view showing the second exemplary embodiment of a bearing device according to the present invention.
Figure 3a is a sectioned perspective view showing a third exemplary embodiment of a bearing device according to the present invention.
Figure 3b is a cross-sectional view showing the third exemplary embodiment of a bearing device according to the present invention.
Figure 4a is a sectioned perspective view showing a fourth exemplary embodiment of a bearing device according to the present invention.
Figure 4b is a cross-sectional view showing the fourth exemplary embodiment of a bearing device arrangement according to the present invention.

### DETAILED DESCRIPTION OF EMBODIMENTS

In the following detailed description, some embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

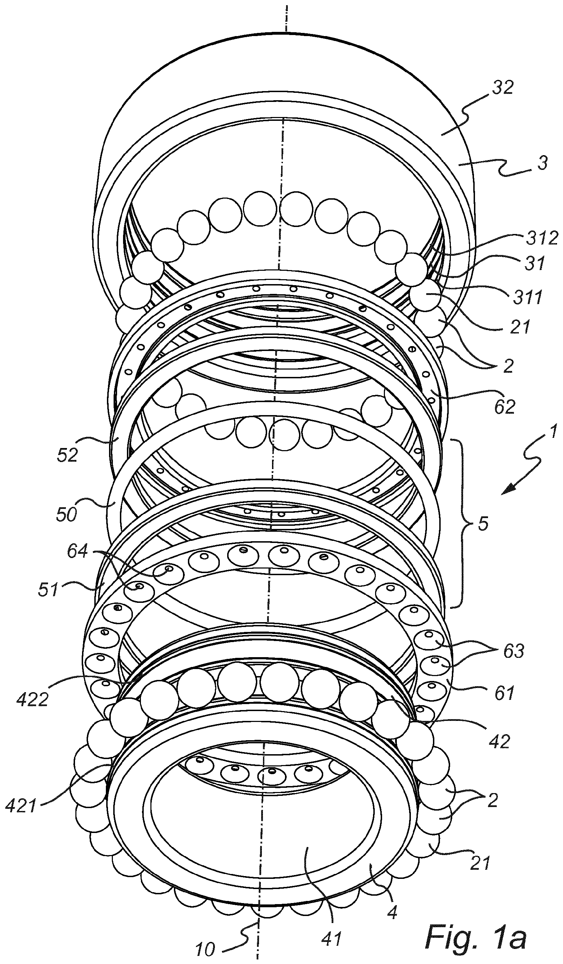

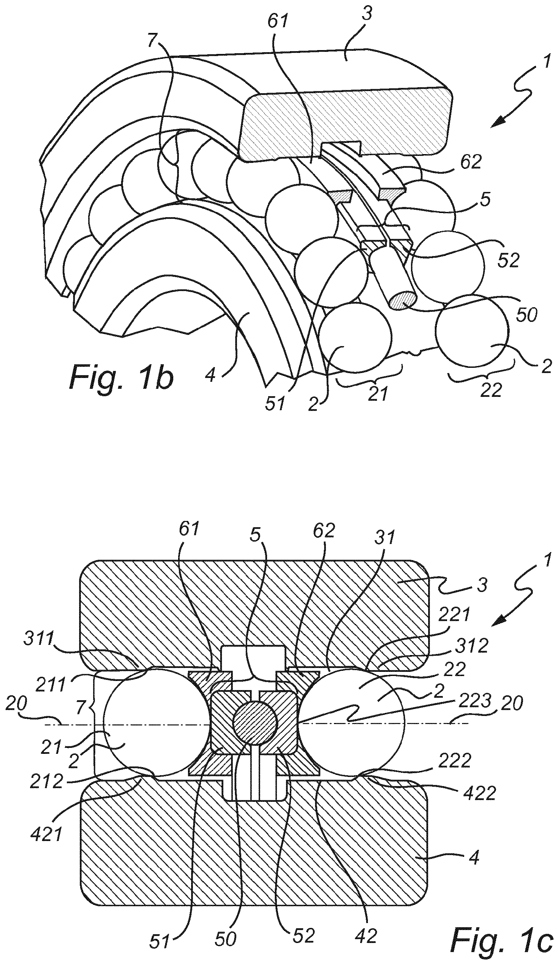

Figure 1a illustrates an exploded view of a first exemplary embodiment of a bearing device 1 according to the present invention. The bearing device 1 comprises a plurality of rolling elements 2, an outer ring 3, an inner ring 4, a spring unit 5, a first cage 61 and a second cage 62. Some features of the different parts will be described below, and how these parts are arranged in relation to each other will be described in more detail in relation to Figure 1b and Figure 1c.

The illustrated embodiment comprises fifty-four rolling elements 2, arranged in a first row 21 and a second row 22, with twenty-seven rolling elements 2 in each row. The number of the plurality of rolling elements 2 only serves as an example, any suitable number of rolling elements may be used. The plurality of rolling elements 2 are spheroidal. More specifically, the plurality of rolling elements 2 in this embodiment are spherical.

The outer ring 3 has a toroid shape, with an inner surface 31 and an outer surface 32. On the inner surface 31 of the outer ring 3, at least two circumferentially extending protrusions 311, 312 are arranged. These will be described more in relation to Figure 1c. The inner ring 4 also has a toroid shape, with an inner surface 41 and an outer surface 42. On the outer surface 42 of the inner ring 4, at least two circumferentially extending protrusions 421, 422 are arranged. These will also be described more in relation to Figure 1c.

The bearing device 1 further comprises a spring unit 5. The spring unit 5 is arranged between the first row 21 and the second row 22 of rolling elements 2, and it is arranged to press the first row 21 and the second row 22 in opposite directions. In this embodiment, the spring unit 5 is ring shaped. The spring unit 5 comprises an elastically deformable element 50, a first supporting element 51 and a second supporting element 52. The elastically deformable element 50 may for example be an O-ring. The supporting elements 51, 52 are preferably also ring shaped, and arranged on each side of the elastically deformable element 50. The supporting elements are made of a stiffer material than the elastically deformable element.

The bearing device 1 according to the first exemplary embodiment further comprises a first cage 61 and a second cage 62 for separating the plurality of rolling elements 2 in the first row 21 and in the second row 22 respectively from each other. The first cage 61 and the second cage 62 are arranged between the spring unit 5 and the first row 21 and second row 22 of rolling elements 2 respectively. The first cage 61 and the second cage 62 are in this embodiment mirror images of each other. They are ring shaped and have, on the side facing the rolling elements, a cavity 63 for each of the plurality of rolling elements 2. In this embodiment, the cavities 63 are semi-spheroidal. At the bottom of each cavity 63, there is an aperture 64, for allowing the rolling elements 2 to be in contact with the supporting elements 51, 52 of the spring unit 5. In order to minimise the friction acting on the rolling elements 2, the cavities 63 are preferably made slightly larger than the rolling elements 2, so that they are not in contact with each other.

The first row 21 and the second row 22 of rolling elements 2 are arranged to rotate about a central axis 10 of the bearing device. Each one of the rolling elements 2 in the first row 21 and in the second row 22 are also arranged to rotate about a respective rolling element rotational axis 20 (shown in Figure 1c).

Figure 1b is a sectioned perspective view of the first exemplary embodiment of a bearing device 1 according to the present invention. The inner ring 4 and the outer ring 3 are arranged coaxially. The inner ring 4 is further arranged inside the outer ring 3, such that an intermediate ring space 7 is formed between the inner ring 4 and the outer ring 3. In this intermediate ring space 7, both the first 21 and the second row 22 of rolling elements 2 are arranged. The spring unit 5 as well as the first 61 and the second cage 62 are also arranged in the intermediate ring space 7. All of the elements arranged in the intermediate ring space 7 are kept in place between the protrusions 311, 312, 421, 422 on the inner surface 31 of the outer ring 3 and the outer surface 42 of the inner ring 4 (shown in Figure 1c). The spring unit 5 is arranged at the centre of the intermediate ring space 7, with the elastically deformable element 50 at the very centre and the first 51 and second supporting elements 52 on each side of the elastically deformable element 50. The first 61 and second cage 62 are arranged adjacent to the first and second supporting elements 51, 52 respectively. The first row 21 and the second row 22 of rolling elements 2 are then arranged adjacent to each cage 61, 62 respectively.

Figure 1c is a cross-sectional view of the first exemplary embodiment of a bearing device 1 according to the present invention. Here it is shown how the first point contact 211, the second point contact 212 and the third point contact 213 are established between each one of the rolling elements 2 in the first row 21 and the outer ring 3, inner ring 4 and spring unit 5 respectively. The fourth point contact 221, the fifth point contact 222 and the sixth point contact 223 between each one of the rolling elements 2 in the second row 22 and the outer ring 3, inner ring 4 and spring unit 5 respectively are also shown. The first point contact 211 and the second point contact 212 are the only points at which each one of the plurality of rolling elements 2 in the first row 21 are in contact with the inner ring 4 and outer ring 3 respectively, and the fourth point contact 221 and fifth point contact 222 are the only points at which each one of the plurality of rolling elements 2 in the second row 22 are in contact with the inner ring 4 and outer ring 3 respectively. These point contacts are established at the protrusions 311, 312, 421, 422 on the inner surface 31 of the outer ring 3 and the outer surface 42 of the inner ring 4.

The spring unit 5 is arranged such that a third point contact 213 is established between each one of the rolling elements 2 in the first row 21 and the spring unit 5, and a sixth point contact 223 is established between each one of the rolling elements 2 in the second row 22 and the spring unit 5. More specifically, the third point contact 213 between each one of the plurality of rolling elements 2 in the first row 21 and the spring unit 5 is provided on the first supporting element 51, and the sixth point contact 223 between each one of the plurality of rolling elements 2 in the second row 22 and the spring unit 5 is provided on the second supporting element 52. The spring unit 5 is arranged to press the rolling elements 2 in the first row 21 against the first point contact 211 and the second point contact 212, and to press the rolling elements 2 in the second row 22 against the fourth point contact 221 and the fifth point contact 222. The rolling elements 2 in the first row 21 and in the second row 22 and the spring unit 5 is arranged so that the spring unit 5 is elastically deformed. More specifically, the elastically deformable element 50 of the spring unit 5 is elastically deformed.

In the illustrated embodiment, the respective rolling element rotational axis 20 intersects the third point contact 213 and the sixth point contact 223 for each rolling element 2 in the first row 21 and second row 22 respectively. The first point contact 211 and second point contact 212 are arranged symmetrically about the rolling element rotational axis 20 in relation to the third point contact. The fourth point contact 221 and the fifth point contact 222 are arranged in the same way.

The first cage 61 and the second cage 62 have a cross-section which allows them to fit between the plurality of rolling elements 2 in the first 21 and second row 22 and the first 51 and second supporting elements 52 respectively. As described before, the plurality of rolling elements 2 are in some embodiments not in contact with the first 61 or second cage 62.

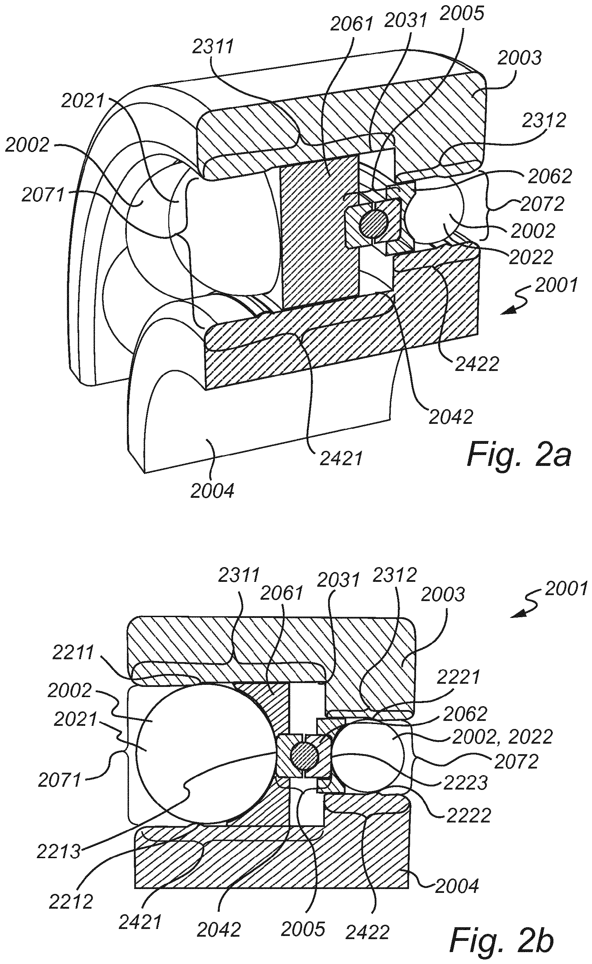

Figure 2a and Figure 2b is a sectioned perspective view and a cross-sectional view respectively, of a second exemplary embodiment of a bearing device 2001 according to the present invention. This embodiment is similar to the first embodiment 1, but here the rolling elements 2002 in the first row 2021 have a larger diameter than the rolling elements 2002 in the second row 2022. The inner surface 2031 of the outer ring 2003 has a first 2311 and a second portion 2312 in this embodiment. At the first portion 2311, the inner diameter of the outer ring 2003 is larger than at the second portion 2312. Correspondingly, the outer surface 2042 of the inner ring 2004 has a first 2421 and a second portion 2422, wherein the outer diameter of the inner ring 204 is smaller at the first portion 2421 than at the second portion 2422. This means that the intermediate ring space has a wider portion 2071 and a narrower portion 2072, to fit the first 2021 and the second row 2022 of rolling elements 2002 into. The size of the first cage 2061 is also different from the size of the second cage 2062, to fit the size of the rolling elements 2002 in the first row 2021. The spring unit 2005 may be identical to the spring unit 5 in the first exemplary embodiment. All other features, such as the arrangement of the different point contacts 2211, 2212, 2213, 2221, 2222 2223, are similar to those in the first exemplary embodiment.

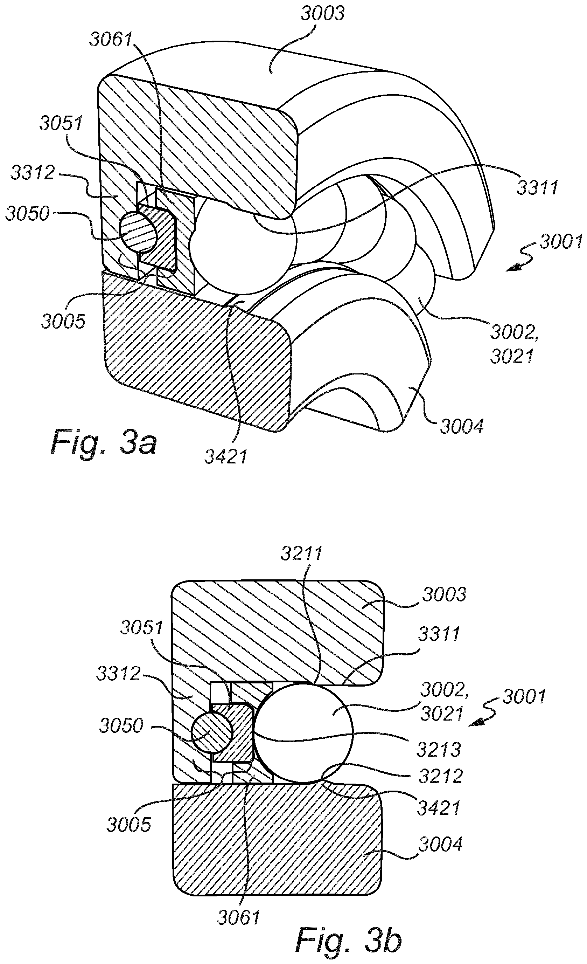

Figure 3a and Figure 3b is a sectioned perspective view and a cross-sectional view respectively, of a third exemplary embodiment of a bearing device 3001 according to the present invention. In this embodiment, the bearing device 3001 only comprises a first row 3021 of rolling elements 3002. The inner ring 3004 only has a first protrusion 3421, at which the second point contact 3212 is located. The outer ring 3003 also has a first protrusion 3311, at which the first point contact 3211 is located. The outer ring 3003 further has a flange 3312 extending towards the inner ring 3004. The spring unit 3005 is arranged between the flange 3312 of the outer ring 3003 and the first cage 3061, and the first cage 3061 is arranged adjacent to the first row 3021 of rolling elements 3002. In this embodiment, the spring unit 3005 comprises an elastically deformable element 3050 and one supporting element 3051. The elastically deformable element 3050 is arranged directly adjacent to the flange 3312 of the outer ring 3003, and the third point contact 3213 is provided at the supporting element 3051.

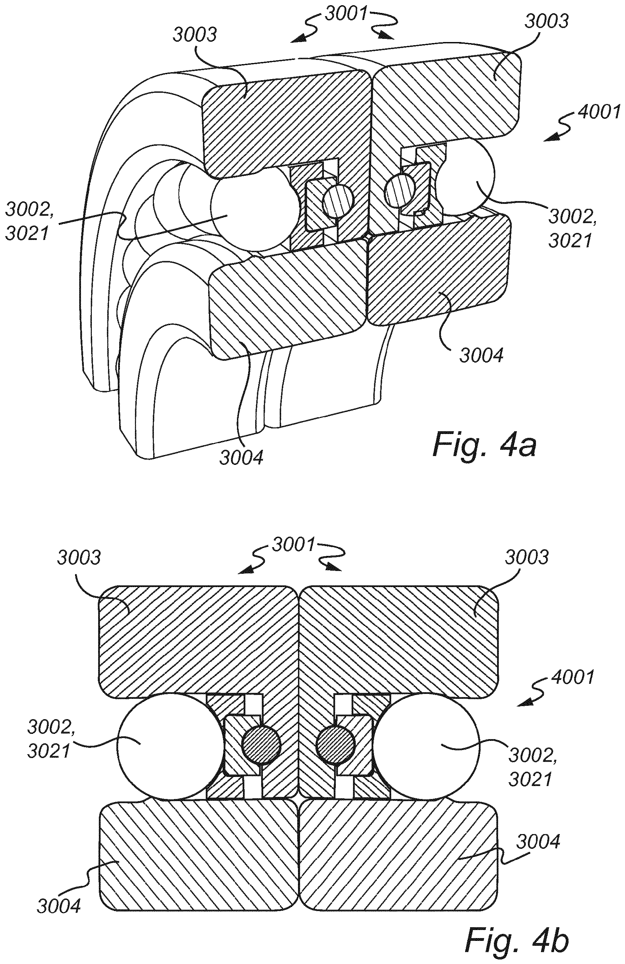

Figure 4a and Figure 4b is a sectioned perspective view and a cross-sectional view respectively, of a fourth exemplary embodiment of a bearing device arrangement 4001 according to the present invention. In this embodiment, two bearing devices 3001 according to the third exemplary embodiment, comprising only one row 3021 of rolling elements each 3002, are arranged next to each other. The inner rings 3004 and the outer rings 3003 of the two bearings are arranged in line with each other. When two bearing devices are arranged next to each other, the inner rings and/or the outer rings respectively may be connected to each other.

The person skilled in the art realizes that the present invention by no means is limited to the embodiments described above. The features of the described embodiments may be combined in different ways, and many modifications and variations are possible within the scope of the appended claims. For example, the number of rolling elements and rows of rolling elements may be varied. The rolling elements may have a different shape than spherical, and the inner and outer rings may have other geometries. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A bearing device comprising
a plurality of rolling elements,
an outer ring,
an inner ring arranged at least partly inside said outer ring such that an intermediate ring space is formed between said outer ring and said inner ring,
wherein said plurality of rolling elements are arranged in at least one row arranged at least partly inside said intermediate ring space, such that a first point contact is established between each one of the rolling elements in said at least one row and said outer ring, and a second point contact is established between each one of the rolling elements in said at least one row and said inner ring,
wherein said bearing device further comprises a spring unit arranged at least partly in said intermediate ring space such that a third point contact is established between each one of the rolling elements in said at least one row and said spring unit,
wherein said spring unit is configured to press the rolling elements in said at least one row against said first point contact and said second point contact.

2. A bearing device according to claim 1, wherein the rolling elements in said at least one row and said spring unit are arranged in said intermediate ring space such that said spring unit is elastically deformed.

3. A bearing device according to claim 2, wherein the spring unit is elastically deformed 0.1 - 3 mm, preferably 0.5 - 1 mm.

4. A bearing device according to any one of the preceding claims, wherein said at least one row is arranged to rotate about a central axis of said bearing device, and each one of said rolling elements in said at least one row is arranged to rotate about a respective rolling element rotational axis.

5. A bearing device according to claim 3, wherein said respective rolling element rotational axis intersects said third point contact for each rolling element in said at least one row.

6. A bearing device according to any one of the preceding claims, wherein said inner ring and said outer ring are arranged coaxially.

7. A bearing device according to any one of the preceding claims, wherein said at least one row is a first row of rolling elements, and wherein said plurality of rolling elements are arranged in at least said first row and in at least a second row arranged at least partly inside said intermediate ring space, such that a fourth point contact is established between each one of the rolling elements in said second row and said outer ring, and a fifth point contact is established between each one of the rolling elements in said second row and said inner ring, and a sixth point contact is established between each one of the rolling elements in said second row and said spring unit.

8. A bearing device according to claim 6, wherein said spring unit is arranged between said first row and said second row of rolling elements.

9. A bearing device according to claim 7, wherein said spring unit is arranged to press said first and second rows of rolling elements in opposite directions.

10. A bearing device according to any one of the preceding claims, wherein said plurality of rolling elements are spheroidal.

11. A bearing device according to any one of the preceding claims, wherein said spring unit comprises an elastically deformable element.

12. A bearing device according to claim 10, wherein said spring unit further comprises a supporting element, wherein the third point contact between each one of said plurality of rolling elements and said spring unit is provided on said supporting element.

13. A bearing device according to any one of the preceding claims, wherein the first point contact and the second point contact are the only points at which each one of the plurality of rolling elements are in contact with said inner ring and/or said outer ring.

14. A bearing device according to any one of the preceding claims, wherein said bearing device further comprises at least one sealing element, for sealing the bearing device to prevent dirt and other unwanted material from entering the device.

15. A bearing device according to any one of the preceding claims, wherein said spring unit is ring shaped.
